# FASCICULE DE BREVET EUROPEEN

(11) **EP 0 609 108 B1**
(45) Date de publication et mention de la délivrance du brevet: **18.09.1996**
(21) Numéro de dépôt: 94400029.8
(22) Date de dépôt: 05.01.1994
(51) Int. Cl.: B23K 9/028

(54) **Procédé et dispositif de soudage orbital d'une pièce cylindrique sur une paroi courbe**
Verfahren und Vorrichtung zum orbitalen Schweissen eines cylindrischen Stücks auf einer gebogenen Wand
Process and apparatus for orbital welding of a cylindrical piece on a curved wall

(30) Priorité: 29.01.1993 FR 9300980
(43) Date de publication de la demande: 03.08.1994
(73) Titulaire: FRAMATOME, 92400 Courbevoie (FR)
(72) Inventeur: Peigney, Alain, F-71240 St Loup de Varennes (FR); Latreille, Pascal, F-71370 St Germain du Plain (FR); Batistoni, Michel, F-71640 Le Bourg (FR)
(74) Mandataire: Bouget, Lucien

(56) Documents cités:
- EP-A- 0 433 179
- DE-A- 1 627 564
- DE-A- 2 228 970
- DE-C- 3 715 521

## Description

L'invention concerne un procédé de soudage orbital d'une pièce cylindrique sur une paroi courbe et en particulier un procédé de soudage d'un adaptateur de traversée du couvercle de la cuve d'un réacteur nucléaire à eau sous pression, lors du remplacement d'un adaptateur défectueux.

Les réacteurs nucléaires à eau sous pression comportent une cuve renfermant le coeur du réacteur qui est plongé dans l'eau sous pression de refroidissement du réacteur.

La cuve du réacteur de forme générale cylindrique comporte un couvercle de forme hémisphérique qui peut être rapporté sur sa partie supérieure. Le couvercle est percé d'ouvertures au niveau de chacune desquelles est fixée par soudure, en position verticale, une pièce tubulaire de traversée constituant un adaptateur assurant le passage d'un prolongateur d'une grappe de contrôle de la réactivité du coeur ou le passage d'un moyen de mesure à l'intérieur du coeur tel qu'une colonne de thermocouples.

Chacune des pièces tubulaires de traversée est engagée dans une ouverture traversant le couvercle de la cuve et soudée sur la surface inférieure concave du couvercle, par une soudure annulaire.

Le soudage de l'adaptateur sur le couvercle de cuve est réalisé par une technique de soudage orbital, en utilisant une tête de soudage TIG comportant une électrode et un moyen d'amenée d'un fil en métal d'apport au niveau de l'électrode. La tête de soudage est déplacée en rotation autour de l'axe de la traversée et permet de déposer du métal d'apport sous forme de cordons de soudage successifs, à l'intérieur d'un chanfrein annulaire entourant la pièce de traversée et ménagé au moins partiellement à l'intérieur du couvercle, au niveau de l'ouverture de traversée.

Généralement, le chanfrein de soudage de forme annulaire ayant pour axe l'axe de la traversée présente une section méridienne qui s'élargit, depuis le fond du chanfrein à l'intérieur du couvercle, jusqu'à l'extrémité externe du chanfrein au niveau de la surface concave du couvercle.

La largeur du chanfrein, même dans sa partie la plus étroite, est généralement supérieure à la largeur d'un cordon de soudage en métal d'apport qui peut être déposé par la tête de soudage, au cours d'une rotation autour de l'axe de la traversée.

Il est donc nécessaire de réaliser le remplissage du chanfrein en juxtaposant, suivant la largeur du chanfrein, des cordons de soudure qui sont réalisés au cours de passes successives.

Les cordons de soudure juxtaposés suivant la largeur du chanfrein constituent une couche qui est réalisée en plusieurs passes successives au cours de chacune desquelles la tête de soudure effectue un tour complet en rotation autour de l'axe de la traversée.

Les couches successives de métal d'apport constituées de cordons de soudure juxtaposés sont elles-mêmes superposées, de manière à remplir la totalité du chanfrein. Le soudage d'un adaptateur qui nécessite de nombreuses passes successives de soudage orbital est donc une opération généralement longue au cours de laquelle on dépose un volume important de métal d'apport.

En outre, la position des électrodes et en particulier leur orientation à l'intérieur du chanfrein doit être réglée au cours de chacune des passes successives pour obtenir des conditions de soudage optimales. Parallèlement, le fil d'apport doit être amené dans la zone de soudure suivant une orientation et dans une position variables.

Du fait de la masse importante de métal d'apport déposé, il peut se produire des déformations importantes au niveau de la traversée.

En outre, dans le cas d'un couvercle de cuve de forme sphérique, le soudage est réalisé sur la surface concave inférieure du couvercle, de sorte que les adaptateurs répartis suivant la surface en forme de calotte sphérique du couvercle et dont l'axe a une direction constante qui est la direction verticale, présentent des chanfreins de raccordement à la surface courbe du couvercle dont la forme est complexe.

Du fait qu'il est nécessaire également de réaliser au moins certaines passes de soudage dans des positions d'électrodes inclinées par rapport à l'axe de la traversée, le réglage de la position et de l'inclinaison de l'électrode peut s'avérer extrêmement complexe sinon impossible.

Pour remédier à ces inconvénients, on a proposé un nouveau type de soudage TIG orbital généralement désigné comme procédé de soudage à chanfrein étroit ; dans ce procédé, on réduit à une valeur la plus faible possible, la largeur du chanfrein, de manière à pouvoir effectuer le remplissage du chanfrein par des couches superposées constituées chacune d'un seul cordon de soudure réalisé au cours d'une seule passe.

De ce fait, le volume de métal déposé est considérablement réduit, de même que les déformations et les contraintes résiduelles au niveau de la zone de soudage. En outre, le temps de soudage est sensiblement plus court, ce qui permet de diminuer sensiblement le temps nécessaire pour la fabrication du couvercle de cuve.

Un avantage important du procédé de soudage en chanfrein étroit est également que l'électrode présente une inclinaison sensiblement constante d'une passe à une autre, l'électrode pouvant être placée sensiblement dans une direction parallèle à l'axe de la traversée.

Cependant, le procédé de soudage à chanfrein étroit n'est pas particulièrement adapté au cas du soudage d'adaptateurs en un point quelconque de la surface d'un couvercle de cuve en forme de calotte sphérique, même si le réglage de la position et de l'inclinaison de l'électrode de soudage orbital est beaucoup plus facile que dans le cas du soudage classique à chanfrein large.

En effet, la surface du fond du chanfrein ou des couches successives déposées sur le fond du chanfrein présente une forme géométrique complexe pour tous les adaptateurs, à l'exception de l'adaptateur situé à la partie centrale du couvercle, au sommet de la calotte sphérique.

Le fond des chanfreins ou les couches de soudage successives présentent la forme de surfaces gauches qui peuvent être considérablement inclinées par rapport à un plan horizontal.

La cinématique habituelle de déplacement des électrodes en soudage orbital ne permet pas d'assurer des conditions de soudage satisfaisantes, c'est-à-dire une distance constante entre l'extrémité de l'électrode et le fond du chanfrein à recouvrir et une vitesse de soudage par dépôt de métal d'apport constante.

Cette difficulté se présente non seulement dans le cas des adaptateurs de traversée d'un couvercle de cuve mais encore dans le cas du soudage orbital de toute pièce de forme cylindrique sur une paroi courbe au niveau d'une ouverture traversant la paroi, lorsque l'axe de la traversée ne passe pas par le centre de courbure de la paroi.

Le but de l'invention est donc de proposer un procédé de soudage orbital d'une pièce cylindrique sur une paroi courbe, au niveau d'une ouverture traversant la paroi dans laquelle est engagée la pièce cylindrique, par dépôt de métal obtenu par fusion d'un fil en métal d'apport, à l'aide d'une électrode, dans un chanfrein entourant la pièce cylindrique, au niveau de l'ouverture de traversée de la paroi, l'électrode et le fil en métal d'apport se déplaçant pendant le soudage en rotation autour de l'axe de la pièce cylindrique, de manière à déposer l'une sur l'autre, des couches recouvrant chacune toute la largeur du chanfrein, ce procédé permettant de réaliser de manière satisfaisante le soudage de la pièce cylindrique, même dans le cas où l'axe de cette pièce ne passe pas par le centre de courbure de la paroi.

Dans ce but, pendant le soudage, au cours de chacune des rotations d'un tour complet de l'électrode et du fil d'apport autour de l'axe de la pièce cylindrique,
- on fait varier la vitesse de rotation de l'électrode et la vitesse de rotation du fil d'apport autour de l'axe de la pièce cylindrique, pour obtenir une vitesse de soudage linéaire constante,
- et on déplace l'électrode et le fil d'apport en translation dans la direction de l'axe de la pièce cylindrique, l'électrode étant constamment disposée dans une direction parallèle à l'axe de la pièce cylindrique.

Afin de bien faire comprendre l'invention, on va maintenant décrire, à titre d'exemple, en se référant aux figures jointes en annexe, la mise en oeuvre du procédé suivant l'invention pour réaliser le soudage d'un adaptateur de traversée d'un couvercle de cuve sur la surface interne concave de ce couvercle.

La figure 1 est une vue en coupe schématique par un plan vertical et en élévation d'un couvercle de cuve et de deux adaptateurs de ce couvercle.

La figure 2 est une vue en coupe partielle à plus grande échelle, de la partie inférieure d'un adaptateur de remplacement au voisinage de la soudure de fixation sur le couvercle de cuve.

La figure 3 est une demi-vue en coupe par un plan vertical de la zone de soudage d'un adaptateur, dans le cas d'un soudage à chanfrein large suivant l'art antérieur.

La figure 4 est une demi-vue en coupe schématique de la zone de soudage d'un adaptateur, dans le cas d'un soudage à chanfrein étroit.

La figure 5 est une vue en coupe schématique montrant différentes positions d'une tête de soudage, lors de la mise en oeuvre d'un procédé suivant l'invention.

La figure 6 est une vue générale d'une installation de soudage permettant la mise en oeuvre du procédé suivant l'invention.

La figure 7 est une vue à plus grande échelle montrant le principe mécanique de déplacement de la tête de soudage de l'installation représentée sur la figure 6.

La figure 8 est une vue en élévation et en coupe montrant une tête de soudure suivant l'invention équipée de deux guides-fils.

La figure 9 est une demi-vue en coupe de la partie inférieure d'un adaptateur fixé sur le couvercle de la cuve d'un réacteur nucléaire en utilisant une variante de réalisation du procédé de l'invention.

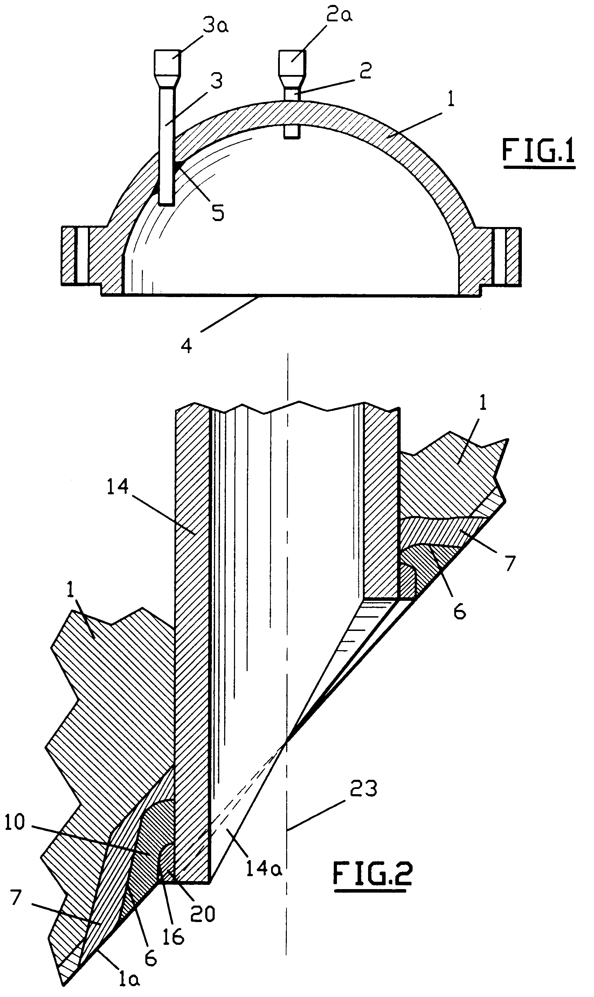

Sur la figure 1, on voit un couvercle 1 d'une cuve de réacteur nucléaire à eau sous pression ayant la forme d'une calotte sphérique qui est traversé par des ouvertures dans lesquelles sont fixées des pièces tubulaires de traversée telles que 2 et 3 appelées adaptateurs.

Les adaptateurs tels que 2 et 3 comportent une partie tubulaire engagée et fixée dans une ouverture traversant le couvercle 1 et une partie d'extrémité élargie 2a ou 3a sur laquelle est fixé un mécanisme permettant de déplacer le prolongateur d'une grappe de commande traversant le couvercle à l'intérieur de l'adaptateur 3.

Lors de la construction du couvercle de cuve, après formage et usinage du couvercle qui est percé d'une pluralité d'ouvertures permettant le passage des adaptateurs, on introduit les adaptateurs dans les ouvertures et on assure la fixation des adaptateurs tels que 2 et 3 sur le couvercle de cuve et l'étanchéité du passage de ces adaptateurs dans les ouvertures du couvercle, en réalisant des cordons de soudure annulaires tels que 5.

L'opération de soudage consiste à déposer un métal d'apport dans un chanfrein annulaire entourant l'adaptateur, dans l'épaisseur du couvercle de cuve. Le couvercle de cuve et éventuellement l'adaptateur sont usinés de manière à obtenir un chanfrein de forme voulue.

L'adaptateur 2 situé au sommet du couvercle 1, sur l'axe de ce couvercle est fixé par une soudure déposée à l'intérieur d'un chanfrein ayant lui-même pour axe l'axe du couvercle. Cette disposition du chanfrein de l'adaptateur 2 permet de réaliser la soudure de manière automatique, par soudage orbital, en utilisant une tête de soudage entraînée en rotation autour de l'axe du couvercle.

Comme expliqué plus haut, la soudure est réalisée par dépôt de cordons de soudure successifs superposés dans le chanfrein.

Dans le cas d'un adaptateur tel que l'adaptateur 3, disposé dans une partie non centrale du couvercle, le chanfrein présente une forme complexe et une inclinaison qui peut être importante par rapport à un plan horizontal.

Après un certain temps d'utilisation du couvercle de cuve, on effectue le contrôle des adaptateurs pour déceler des fissures éventuelles sur leur surface interne en particulier dans la zone de la soudure. Dans le cas où des fissures sont décelées, il peut être nécessaire d'effectuer des réparations ou même de remplacer l'adaptateur par un adaptateur neuf. Dans ce dernier cas, on usine la soudure de liaison de l'adaptateur et du couvercle pour enlever l'adaptateur défectueux et on place un adaptateur neuf dans l'ouverture du couvercle. On réalise une soudure de liaison de l'adaptateur, le couvercle étant placé dans sa position représentée sur la figure 1.

La soudure doit être réalisée sur une surface dirigée vers le bas, ce type de soudage étant généralement désigné par les techniciens par le terme "soudage au plafond".

Sur la figure 2, on a représenté la partie inférieure située au voisinage de la surface inférieure la du couvercle de cuve 1 d'un adaptateur 14 de remplacement de l'adaptateur 3.

Comme il est visible sur la figure 2, la surface 14a de l'extrémité inférieure de l'adaptateur présente une forme complexe et une inclinaison importante par rapport à un plan horizontal.

On a représenté de plus sur la figure 2, le chanfrein 6 dans lequel on a réalisé le dépôt d'une soudure 10, lors de la fabrication du couvercle pour la fixation de l'adaptateur d'origine dont on a ensuite réalisé le remplacement. Le chanfrein 6 est réalisé suivant une technique connue dans laquelle le chanfrein est évasé vers le bas, c'est-à-dire en direction de la surface inférieure la du couvercle et présente une largeur importante au niveau de cette surface.

La surface inférieure la du couvercle 1 est recouverte d'une couche de revêtement 7 en acier inoxydable qui recouvre également le fond du chanfrein 6.

En effet, le couvercle en acier faiblement allié doit être recouvert, sur sa surface interne destinée à venir en contact avec l'eau sous pression du réacteur nucléaire, d'une couche anti-corrosive d'acier inoxydable. De plus, la couche de revêtement en acier inoxydable 7 à l'intérieur du chanfrein 6 permet d'améliorer les conditions du soudage de l'adaptateur 14 en alliage de nickel sur le couvercle de cuve.

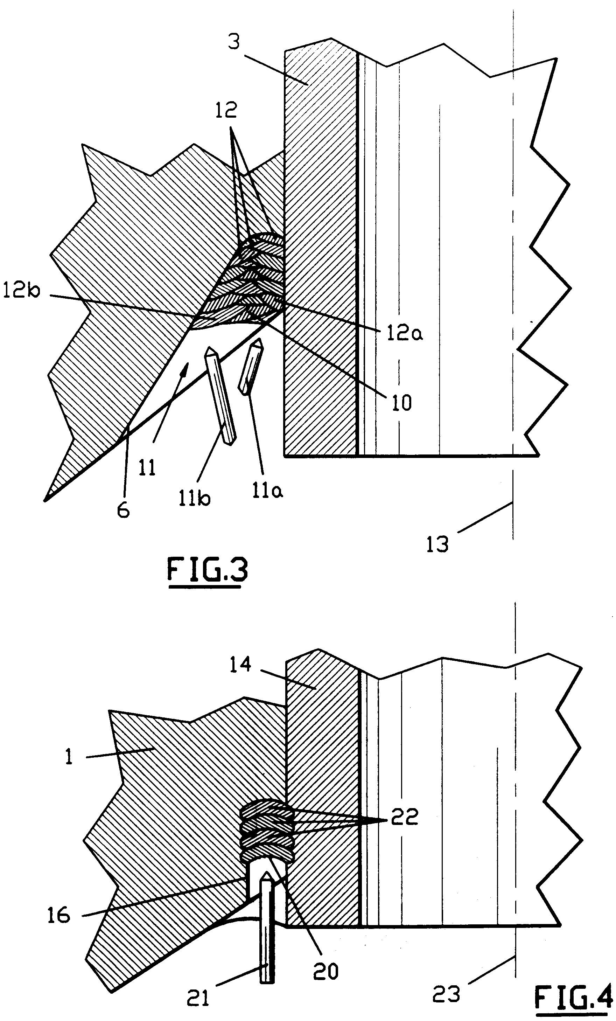

Sur la figure 3, on a représenté la soudure 10 en métal d'apport en cours de réalisation à l'intérieur du chanfrein 6 entourant l'adaptateur 3, lors du montage de l'adaptateur d'origine 3.

La soudure 10 est réalisée par soudage orbital en utilisant une tête de soudure TIG comportant une électrode 11 en tungstène, un dispositif d'amenée de fil d'apport au voisinage de l'électrode et une arrivée de gaz inerte à l'extrémité de l'électrode 11, dans la zone de fusion.

La soudure 10 est constituée par des cordons de soudure 12 juxtaposés pour constituer des couches successives de la soudure qui sont superposées, chacun des cordons de soudure 12 étant réalisé au cours d'un tour de la tête de soudure qui est mise en rotation autour de l'axe 13 de l'adaptateur 3.

Pour réaliser les cordons de soudure 12 dans de bonnes conditions, l'inclinaison de l'électrode 11 doit être réglée de manière différente, suivant la position du cordon de soudure dans le chanfrein 6.

Comme il est visible sur la figure 3, pour réaliser le cordon de soudure interne 12a de la dernière couche en cours de dépôt, l'électrode doit présenter une première position 11a et une première inclinaison et pour réaliser le cordon externe 12b, une seconde position llb et une seconde inclinaison.

Il est donc extrêmement difficile de régler les conditions de soudage, dans la mesure où non seulement l'inclinaison de l'électrode 11 mais encore l'inclinaison du fil d'apport doivent être réglées de manière différente pour chacune des passes de soudage.

En outre, l'inclinaison de l'électrode et du fil d'apport doit être réglée non seulement dans un plan transversal par rapport au cordon de soudure comme représenté sur la figure 3 mais encore dans un plan de direction longitudinale par rapport au cordon de soudure 12.

Le nombre de passes successives nécessaires pour réaliser la soudure 10 peut être extrêmement important, du fait que le chanfrein est largement évasé vers l'extérieur pour permettre une introduction et une orientation de l'électrode et du fil d'apport.

Sur la figure 4, on a représenté une partie d'extrémité de l'adaptateur de remplacement 14 qui est fixé sur le couvercle de cuve 1 par l'intermédiaire d'une soudure 20 en métal d'apport déposé à l'intérieur d'un chanfrein étroit 16 usiné dans le métal de la soudure 10 remplissant le chanfrein 6. La largeur du chanfrein 16 dans la direction radiale de l'adaptateur 14 est sensiblement inférieure à la largeur du chanfrein 6 de fixation de l'adaptateur d'origine.

Comme il est visible sur la figure 4, la soudure 20 en métal d'apport peut être réalisée en utilisant une tête de soudage orbital comportant une électrode 21 par dépôts successifs de couches 22 superposées de métal d'apport, à l'intérieur du chanfrein 16.

Chacune des couches superposées 22 est constituée par un seul cordon de soudure réalisé au cours d'une seule passe, par rotation de la tête de soudure comportant l'électrode 21 d'un angle de 360° ou un peu supérieur, autour de l'axe 23 de l'adaptateur 14.

En effet, la largeur du chanfrein 16 est suffisamment petite pour que chacun des cordons de soudure 22 déposés par la tête de soudage orbital puisse recouvrir le fond du chanfrein ou la couche précédente sur toute la largeur du chanfrein.

La soudure 20 est réalisée avec l'électrode 21 dans une disposition parallèle à l'axe 23 de l'adaptateur 14, pendant toute la durée du soudage.

De même, l'inclinaison du fil de soudage amené à l'extrémité de l'électrode 21 peut être réglée à une valeur sensiblement fixe.

Cependant, le chanfrein étroit 16 présente une forme complexe et une forte inclinaison par rapport à un plan horizontal, du fait que le chanfrein et le cordon de soudure doivent entourer l'extrémité inférieure de l'adaptateur qui est une surface gauche inclinée et de forme complexe.

Pour obtenir des conditions de soudage satisfaisantes, il est nécessaire que l'extrémité de l'électrode au niveau de laquelle est amené le fil d'apport soit constamment à une distance sensiblement fixe du fond du chanfrein ou de la couche précédente de soudure sur laquelle on dépose le cordon 22.

En outre, il est également nécessaire que la vitesse de dépôt du métal d'apport soit sensiblement constante au cours de la rotation de la tête de soudage orbital autour de l'axe 23 de l'adaptateur 14.

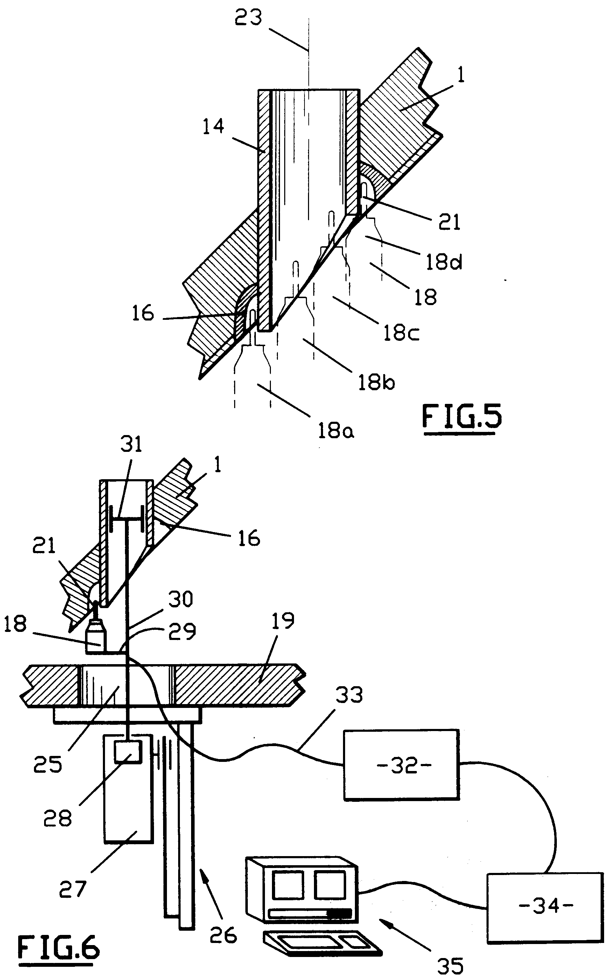

Sur la figure 5, on a représenté différentes positions 18a, 18b, 18c, 18d de la tête de soudage orbital 18 comportant l'électrode 21, pendant sa rotation autour de l'axe 23 de l'adaptateur 14 pour effectuer le dépôt d'un cordon de soudure 22 à l'intérieur du chanfrein étroit 16.

Au cours de sa rotation, la tête de soudage 18 doit être déplacée dans la direction axiale de l'adaptateur, c'est-à-dire dans la direction de l'axe 23, de manière à régler la distance entre l'extrémité de l'électrode 21 et le fond du chanfrein 16 à une valeur sensiblement fixe.

Cette distance est réglée en déplaçant la tête de soudure pour asservir la longueur de l'arc à la tension de soudage.

Afin d'obtenir une vitesse de soudage constante, la vitesse de rotation de l'électrode autour de l'axe 23 de l'adaptateur 14 et du chanfrein 16 doit être modulée pendant la rotation d'un tour de l'électrode autour de l'axe de l'adaptateur. En effet, la vitesse de dépôt du métal d'apport qui correspond à la vitesse de déplacement de la pointe de l'électrode par rapport au fond du chanfrein est une combinaison de la vitesse de rotation et de la vitesse de translation dans la direction axiale de la tête de soudure. Cette vitesse composée ne peut être constante si la vitesse de rotation est maintenue à une valeur fixe.

Il est à remarquer que dans le cas d'un adaptateur tel que l'adaptateur de remplacement 14 placé dans une position non centrale sur le couvercle de cuve 15, lorsque l'électrode 21 décrit une trajectoire à l'intérieur du chanfrein 16, au cours du soudage orbital, une partie de la trajectoire s'élève par rapport à un plan horizontal et une seconde partie de la trajectoire est dirigée dans le sens de la descente. Ces deux parties de la trajectoire seront designées par la suite comme partie montante et partie descendante de la trajectoire de l'électrode.

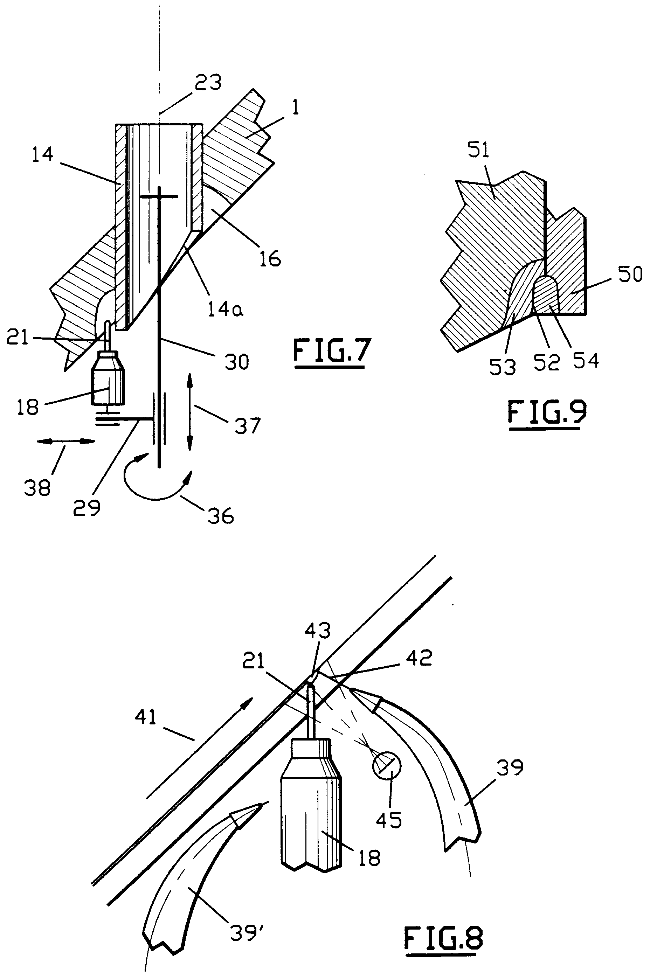

Sur les figures 6 et 7, on a représenté une installation de soudage permettant de réaliser le soudage orbital à chanfrein étroit, de l'adaptateur 14 sur le couvercle 1 de la cuve d'un réacteur nucléaire, avec déplacement dans la direction axiale de la tête de soudage 18 et modulation de la vitesse de rotation de cette tête de soudage autour de l'axe de l'adaptateur.

Le soudage de l'adaptateur 14 est réalisé dans le cadre d'une opération de remplacement d'un adaptateur présentant des fissures qui sont apparues en service ; la surface inférieure du couvercle 1 qui vient en contact avec l'eau primaire du réacteur en service peut être fortement contaminée.

Le remplacement de l'adaptateur est réalisé en plaçant le couvercle 1 de la cuve sur un stand d'intervention comportant une plaque de protection biologique 19 au-dessus de laquelle on vient déposer le couvercle 1 dans sa position telle que représentée sur la figure 1, dans laquelle les adaptateurs ont leurs axes verticaux.

La plaque de protection biologique 19 comporte au moins une ouverture 25 qui est placée à la verticale de l'adaptateur 14 dont on assure le remplacement.

Au niveau de l'ouverture 25, on fixe le support 26 de la machine de soudage qui comporte des rails verticaux de guidage d'un chariot 27.

Le chariot 27 comporte des moyens de déplacement dans la direction verticale qui peuvent être commandés, à partir des paramètres du soudage, pour maintenir une longueur d'arc constante entre l'électrode 21 et le fond du chanfrein 16, pendant le soudage.

Le chariot 27 porte un ensemble motoréducteur 28 dont l'axe est relié à une tige 30 de direction verticale portant la tête de soudage 18 par l'intermédiaire d'un support horizontal 29 de direction radiale.

Le motoréducteur 28 assure la mise en rotation autour de l'axe 23 de l'adaptateur 14, de la tige 30 qui est engagée dans un palier de guidage 31 à l'intérieur de l'adaptateur 14.

L'ensemble motoréducteur 28 est relié à une unité de commande permettant de moduler la vitesse de rotation au cours des passes de soudage.

L'installation de soudage comporte également un générateur de soudage TIG 32 relié par l'intermédiaire d'un ensemble de câbles et de tuyauteries passant à l'intérieur d'un ombilical 33, à la tête de soudage 18.

Le générateur TIG 32 permet en particulier d'alimenter l'électrode en courant électrique et d'amener du gaz inerte au voisinage de la pointe de l'électrode pendant le soudage.

La tête de soudure comporte également deux dispositifs d'amenée de fil en métal d'apport qui seront décrits plus bas en se référant à la figure 8.

Le générateur TIG 32 est relié à une unité 34 de contrôle et de commande permettant de régler les paramètres du soudage et de commander les déplacements de la tête de soudure.

Un pupitre de commande 35 permet à un opérateur de surveiller et de commander les différentes passes nécessaires pour réaliser la soudure de l'adaptateur 14, par remplissage du chanfrein étroit 16. L'opérateur utilisant le pupitre de commande 35 est protégé contre les radiations provenant de la surface inférieure du couvercle de la cuve par la plaque de couverture biologique 19.

Sur la figure 7, on a représenté de manière schématique, les différents déplacements possibles de la tête de soudure 18. La tête de soudure 18 est déplacée en rotation autour de l'axe 23 de l'adaptateur 14 à vitesse variable et réglée, comme représenté de manière schématique par la flèche courbe 36, par l'intermédiaire de la tige 30 solidaire de l'axe de sortie du motoréducteur 28.

En outre, la tige 30 et la tête de soudure 18 se déplacent en translation dans la direction de l'axe 23, dans un sens ou dans l'autre, simultanément à la rotation, comme schématisé par la flèche 37.

La tête de soudure 18 est de plus montée mobile dans la direction radiale sur le support 29, de manière à ce qu'on puisse régler la position radiale de l'électrode 21, comme schématisé par la flèche 38.

De manière à réaliser au cours de chacune des passes, le dépôt d'un cordon de soudure avec recouvrement, la tête de soudure pourra effectuer une rotation d'un angle d'au moins 400° autour de l'axe 23 de l'adaptateur, au cours d'une passe.

La translation axiale représentée par la flèche 37 est généralement de l'ordre de 150 mm ou supérieure, ce qui correspond à la différence d'altitude entre le point le plus bas et le point le plus haut de la zone de soudure.

Sur la figure 8, on a représenté deux guides-fils 39 et 39' qui sont associés à la tête de soudage 18 et disposés de part et d'autre de cette tête de soudage, dans le sens de déplacement de la tête de soudage par rapport au chanfrein, représenté par la flèche 41.

Les guides-fils 39 et 39' sont montés pivotants sur le support de la tête de soudage 18, de manière à être mis alternativement en position de service et en position de repli.

Sur la figure 8, le guide-fil 39 a été représenté dans une position de service et le guide-fil 39' dans une position de repli.

Le guide-fil 39 permet d'amener progressivement le fil de soudage 42 au voisinage de la pointe de l'électrode 21, dans le bain de fusion produit par l'arc 43.

Dans la partie montante de la trajectoire de la tête de soudure 18, on utilise l'un des guides-fils (le guide-fil 39 dans le cas représenté sur la figure 8).

Lorsque la tête de soudage est parvenue au point le plus haut et amorce la partie descendante de sa trajectoire, le guide-fil 39 se trouve disposé de manière que le fil 42 parvienne dans la zone de fusion et de soudage en-dessous de l'électrode. On met alors en service le second guide-fil 39'.

Dans ces conditions, on réalise une soudure au plafond, dans des conditions satisfaisantes.

Une caméra vidéo 45 fixée sur le support de la tête de soudage 18 permet de surveiller la zone dans laquelle est effectuée la soudure. L'image fournie par la caméra vidéo apparaît sur un écran du poste de commande 35 et est exploitée par l'opérateur.

Dans le cas de l'opération de soudage qui a été décrite plus haut, la tête de soudage 18 est entraînée dans un mouvement de rotation continu à vitesse variable avec un déplacement simultané de l'électrode 18 en translation dans la direction de l'axe 23 de l'adaptateur.

Le métal d'apport est déposé aussi bien dans la partie montante de la trajectoire de la tête de soudage que dans la partie descendante, les guides-fils d'amenée du métal d'apport étant permutés au point le plus bas et au point le plus haut de la trajectoire.

Il est possible également de réaliser le soudage en déplaçant la tête de soudage 18 en rotation, de manière alternée dans un sens et dans l'autre. En partant du point le plus bas de la trajectoire de la tête de soudage, on accomplit tout d'abord un dépôt d'un cordon de soudure dans la partie montante de la trajectoire puis on interrompt le soudage dans la partie descendante de la trajectoire. On effectue ensuite un déplacement par rotation de la tête de soudage dans le sens opposé au sens précédent en effectuant le soudage uniquement dans la partie montante de la trajectoire.

On réalise ainsi le soudage avec une tête de soudage comportant un seul guide-fil qui assure l'amenée du fil de métal d'apport à l'avant et au-dessus de l'électrode de soudage pendant la partie montante de la trajectoire. La tête peut comporter deux guides-fils symétriques qui permettent d'effectuer chaque demi-soudure montante.

Sur la figure 9, on a représenté une variante de réalisation d'une soudure en chanfrein étroit d'un adaptateur 50 qui peut être un adaptateur de remplacement d'un adaptateur défectueux, sur le couvercle 51 de la cuve d'un réacteur nucléaire.

Le chanfrein étroit 52 dans lequel est déposé la soudure 54 de fixation de l'adaptateur 50 est usiné à la fois dans la soudure d'origine 53 de l'adaptateur à remplacer et dans la partie externe de la paroi de l'adaptateur 50.

Le soudage par dépôt de cordons de métal d'apport dans le chanfrein 52 est réalisé suivant le procédé décrit plus haut.

Le procédé suivant l'invention permet donc de réaliser de manière plus simple la soudure d'une pièce cylindrique tel qu'un adaptateur, engagée dans une ouverture à l'intérieur d'une paroi courbe. La soudure effectuée présente une très bonne qualité et peut être réalisée en un temps limité. La masse de métal d'apport déposé autour de la pièce à fixer est considérablement réduite, si bien que les contraintes dans la zone de jonction de l'adaptateur sont elles-mêmes réduites.

Dans le cas d'une opération de remplacement d'un adaptateur défectueux traversant le couvercle de la cuve d'un réacteur nucléaire par un adaptateur neuf, le procédé de soudage suivant l'invention peut être facilement mis en oeuvre au niveau d'un stand d'intervention sur lequel le couvercle est placé dans une position correspondant à sa position de service.

La vitesse de rotation de la tête de soudage peut être réglée d'une manière quelconque en fonction des conditions de soudage choisies et des déplacements dans la direction axiale de la tête de soudage nécessités par la disposition et l'orientation du chanfrein.

Bien que le procédé suivant l'invention soit particulièrement avantageux, dans le cas d'une opération de remplacement d'un adaptateur défectueux sur le couvercle de cuve d'un réacteur nucléaire, on peut envisager l'application du procédé suivant l'invention dans d'autres cas, par exemple dans le cas de la fixation de tubulures sur une enceinte de forme courbe et plus généralement pour la fixation de toute pièce cylindrique sur une paroi courbe, dans le cas où l'axe de la pièce cylindrique ne passe pas par le centre de courbure ou par l'axe de symétrie de la paroi courbe.

L'invention peut avoir de nombreuses applications en dehors du domaine de la construction de composants pour réacteur nucléaire et peut être utilisée très largement dans le domaine de la chaudronnerie lourde.

## Revendications

1. Procédé de soudage orbital d'une pièce cylindrique (14, 50) sur une paroi courbe (1, 51), au niveau d'une ouverture traversant la paroi (1, 51) dans laquelle est engagée la pièce cylindrique (14, 50), par dépôt de métal obtenu par fusion d'un fil en métal d'apport, à l'aide d'une électrode (21), dans un chanfrein (16, 52) entourant la pièce cylindrique (14, 50), au niveau de l'ouverture de traversée de la paroi (1, 51), l'électrode (21) et le fil en métal d'apport se déplaçant pendant le soudage, en rotation autour de l'axe de la pièce cylindrique (14, 50), de manière à déposer l'une sur l'autre, des couches (22) recouvrant chacune toute la largeur du chanfrein (16, 52), caractérisé par le fait que pendant le soudage, au cours de chacune des rotations de l'électrode (14, 50) et du fil d'apport autour de l'axe (23) de la pièce cylindrique (14, 50),
- on fait varier la vitesse de rotation de l'électrode (21) et la vitesse de rotation du fil d'apport autour de l'axe de la pièce cylindrique (14, 50), pour obtenir une vitesse de soudage linéaire constante,
- et on déplace l'électrode (21) et le fil d'apport en translation dans la direction de l'axe (23) de la pièce cylindrique (14, 50),
l'électrode (21) étant constamment disposée dans une direction parallèle à l'axe de la pièce cylindrique (14, 50).

2. Procédé de soudage suivant la revendication 1, caractérisé par le fait que le soudage est réalisé au cours de la rotation continue de l'électrode (21) et du fil d'apport autour de l'axe (23) de la pièce cylindrique (14), le fil d'apport (42) étant amené constamment, dans le bain de fusion produit par l'arc (43) issu de l'électrode (21).

3. Procédé suivant l'une quelconque des revendications 1 et 2, caractérisé par le fait que la paroi courbe (1, 51) est un couvercle de cuve de réacteur nucléaire en forme de calotte sphérique et que la pièce cylindrique (14, 50) est un adaptateur tubulaire traversant le couvercle (1, 51) de la cuve de réacteur nucléaire dans une position différente du sommet du couvercle en forme de calotte sphérique, le couvercle comportant un axe passant par son sommet disposé dans la direction verticale et le soudage étant effectué dans un chanfrein situé au niveau de la paroi inférieure concave du couvercle.

4. Dispositif de soudage orbital d'une pièce cylindrique (14, 50) sur une paroi courbe (1, 51), au niveau d'une ouverture traversant la paroi dans laquelle est engagée la pièce cylindrique, comprenant une tête de soudage (18) qui comporte une électrode de soudage (21), au moins un dispositif d'amenée de métal d'apport sous forme de fil (39, 39') et des moyens de déplacement (28, 30) de la tête de soudage (18) en rotation autour de l'axe de la pièce cylindrique (14, 50), caractérisé par le fait qu'il comporte de plus des moyens (26, 27) de déplacement de la tête de soudage en translation dans la direction de l'axe de la pièce cylindrique et des moyens de commande et de réglage (34) assurant le réglage de la vitesse de rotation de la tête de soudage (18) et la commande du déplacement en translation de la tête de soudage (18) dans la direction de l'axe de la pièce cylindrique, pendant son déplacement en rotation.

5. Dispositif suivant la revendication 4, caractérisé par le fait qu'il comporte deux dispositifs (39, 39') d'amenée de fil au voisinage de l'électrode (21) munis de moyens pour leur mise en position de service ou en position hors service.

## Claims

1. Process for orbital welding of a cylindrical part (14, 50) onto a curved wall (1, 51) at the level of an opening passing through the wall (1, 51) in which the cylindrical part (14, 50) is engaged, by depositing metal obtained by melting welding metal wire by means of an electrode (21) in a bevel (16, 52) surrounding the cylindrical part (14, 50) at the level of the opening passing through the wall (1, 51), wherein during welding the electrode (21) and welding metal wire are set in rotation around the axis of the cylindrical part (14, 50) in such a way as to superpose the layers (22) overlapping one another over the entire width of the bevel (16, 52), characterised in that during welding and during the course of each rotation of the electrode (14, 50) and welding wire around the axis (23) of the cylindrical part (14, 50):
- the rotational speed of the electrode (21) and the rotational speed of the welding wire around the axis of the cylindrical part (14, 50) are varied to attain a constant linear welding speed;
- and the electrode (21) and welding wire are displaced relatively in the direction of the axis (23) of the cylindrical part (14, 50),
the electrode (21) being constantly disposed in a direction parallel to the axis of the cylindrical part (14, 50).

2. Welding process according to Claim 1, characterised in that the welding is carried out during continuous rotation of the electrode (21) and the welding wire around the axis (23) of the cylindrical part (14), the welding wire (42) being constantly brought into the melt produced by the arc (43) discharged from the electrode (21).

3. Process according to either of Claims 1 and 2, characterised in that the curved wall (1, 51) is a cover of a nuclear reactor tank in the form of a spherical calotte; and that the cylindrical part (14, 50) is a tubular adapter element passing through the cover (1, 51) of the nuclear reactor tank in a different position at the top of the spherical calotte-shaped cover, said cover having an axis passing through its top arranged in vertical direction and welding being conducted in a bevel located at the level of the lower concave wall of the cover.

4. Device for orbital welding of a cylindrical part (14, 50) onto a curved wall (1, 51) at the level of an opening passing through the wall in which the cylindrical part is engaged, comprising a welding head (18) which includes a welding electrode (21), at least one delivery device for the welding metal in wire form (39, 39') and means (28, 30) for setting the welding head (18) in rotation around the axis of the cylindrical part (14, 50), characterised in that it also comprises means (26, 27) for displacing the welding head relatively in the direction of the axis of the cylindrical part and controlling and regulating means (34) to ensure control of the rotational speed of the welding head (18) and control of the relative displacement of the welding head (18) in the direction of the axis of the cylindrical part while it is being set in rotation.

5. Device according to Claim 4, characterised in that it comprises two devices (39, 39') to bring the wire into the vicinity of the electrode (21) which are equipped with means to place them in operative position or in non-operative position.

## Patentansprüche

1. Verfahren zum orbitalen Schweissen eines zylindrischen Teiles (14, 50) auf eine gekrümmte Seitenwand (1, 51) auf der Höhe einer die Seitenwand (1, 51) durchquerenden Öffnung, in die das zylindrische Teil (14, 50) eingreift, durch Metallanlagerung, die durch Schmelzen eines Metallzuführdrahtes mit Hilfe einer Elektrode (21), in einer Anfasung (16, 52) erhalten wird, die das zylindrische Teil (14, 50) auf der Höhe der Durchquerungsöffnung der Seitenwand (1, 51) umgibt, wobei die Elektrode (21) und der metallische Zuführdraht sich während des Schweissens bewegen, in Drehung um die Achse des zylindrischen Teils (14, 50), derart, daß die eine auf die andere abgelegt wird, wobei schichten (22) jeweils die gesamte Breite der Anfasung (16, 52) bedecken, dadurch gekennzeichnet, daß während des Schweissens bei einer jeden der Drehungen der Elektrode (14, 50) und des Zuführdrahts um die Achse (23) des zylindrischen Teils (14, 50),
- die Drehgeschwindigkeit der Elektrode (21) und die Drehgeschwindigkeit des Zuführdrahtes um die Achse des zylindrischen Teils (14, 50) verändert wird, um eine linear konstante Schweissgeschwindigkeit zu erhalten,
- und die Elektrode (21) und der Zuführdraht translatorisch in die Richtung der Achse (23) des zylindrischen Teils (14, 50) bewegt werden, wobei die Elektrode (21) konstant in einer Richtung parallel zur Achse des zylindrischen Teils (14, 50) angeordnet ist.

2. Schweissverfahren nach Anspruch 1, dadurch gekennzeichnet, daß das Schweissen während der kontinuierlichen Drehung der Elektrode (21) und des Zuführdrahts um die Achse (23) des zylindrischen Teils (14) durchgeführt wird, wobei der Zuführdraht (42) stets in das Schmelzbad zugeführt wird, das von dem Bogen (43) erzeugt wird, der von der Elektrode (21) ausgeht.

3. Verfahren nach Anspruch 1 oder 2, dadurch gekennzeichnet, daß die gekrümmte Seitenwand (1, 51) ein Deckel eines Kernreaktorbehälters in kugelförmiger Kalottenform ist und daß das zylindrische Teil (14, 50) ein rohrförmiger Adapter ist, der den Deckel (1, 51) des Kernreaktorbehälters in einer Position durchquert, die unterschiedlich von der Spitze des Deckels in kugelförmiger Kalottenform ist, wobei der Deckel eine Achse aufweist, die durch seine Spitze läuft, die in der vertikalen Richtung angeordnet ist, und das Schweissen in einer Anfasung durchgeführt wird, die sich auf der Höhe der unteren konkaven Seitenwand des Deckels befindet.

4. Vorrichtung zum orbitalen Schweissen eines zylindrischen Teils (14, 50) auf einer gekrümmten Seitenwand (1, 51), auf der Höhe einer Öffnung, die die Seitenwand durchsetzt, in der das zylindrische Teil eingreift, mit einem Schweisskopf (18), der eine Schweisselektrode (21) aufweist, wenigstens einer Vorrichtung zum Metallzuführen in Form eines Drahtes (39, 39') und mit Bewegungseinrichtungen (28, 30) des Schweisskopfes (18) zum Drehen um die Achse des zylindrischen Teils (14, 50), dadurch gekennzeichnet, daß sie darüber hinaus Einrichtungen (26, 27) zum translatorischen Bewegen des Schweisskopfes in Richtung der Achse des zylindrischen Teils und Einrichtungen zum Steuern und Einstellen (34) aufweist, die die Einstellung der Drehgeschwindigkeit des Schweisskopfes (18) und die Steuerung der translatorischen Bewegung des Schweisskopfes (18) in Richtung der Achse des zylindrischen Teiles während seiner Drehbewegung sicherstellen.

5. Vorrichtung nach Anspruch 4, dadurch gekennzeichnet, daß sie zwei Drahtzuführvorrichtungen (39, 39') in der Nähe der Elektrode (21) aufweist, die mit Einrichtungen zu deren Inbetriebsetzen bzw. Außerbetriebsetzen versehen sind.
